# EUROPÄISCHE PATENTANMELDUNG

(11) **EP 4 293 253 A1**
(43) Veröffentlichungstag der Anmeldung: **20.12.2023**
(21) Anmeldenummer: 23178922.3
(22) Anmeldetag: 13.06.2023
(51) Int. Cl.: F16H 49/00

(54) **SPANNUNGSWELLENGETRIEBE**

(30) Priorität: 15.06.2022 LU 502276
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe mit einer Vorformungsvorrichtung, die wenigstens ein Wälzlager mit einem Lageraußenring aufweist. Das Spannungswellengetriebe zeichnet sich dadurch aus, dass der Lageraußenring axial vorgespannt ist.

## Beschreibung

Die Erfindung betrifft ein Spannungswellengetriebe mit einer Vorformungsvorrichtung, die wenigstens ein Wälzlager mit einem Lageraußenring aufweist.

Ein Spannungswellengetriebe besitzt zumeist ein starres, ringförmiges und innenverzahntes Zahnrad, das Circularspline genannt wird, sowie ein flexibles, außenverzahntes Zahnrad, das Flexspline genannt wird und das in dem von dem innenverzahnten Zahnrad umgebenen Raumvolumen angeordnet ist. In dem Flexspline ist ein ovaler, zumeist elliptischer, Vorformungseinsatz mittels eines radialflexiblen Wälzlagers rotierbar angeordnet. Der Vorformungseinsatz weist an seinem Außenumfang einen Lagersitz für das radialflexible Wälzlager auf. Der Vorformungseinsatz bildet zusammen mit dem auf dem Lagersitz angeordneten radialflexiblen Wälzlager eine Vorformungsvorrichtung in Form eines sogenannten Wellengenerators.

Das radialflexible Wälzlager ermöglicht es, den Vorformungseinsatz relativ zu dem Flexspline rotieren zu können. Der Vorformungseinsatz biegt das radialflexible Wälzlager und den Flexspline zu einer ovalen (zumeist elliptischen) Form, um die Verzahnungen des innenverzahnten Zahnrades und des flexiblen außenverzahnten Zahnrades an jedem Ende der Ellipsen-Hauptachse (Ellipsen-Hochachse) miteinander in Eingriff zu bringen. In Richtung der Ellipsen-Niedrigachse steht die Verzahnung des Flexsplines nicht mit der Verzahnung des Circularsplines in Zahneingriff. Bei dem radialflexiblen Wälzlager handelt es sich zumeist um ein Wälzlager mit Wälzkörpern, die als Wälzkugeln ausgebildet sind. Der Flexspline kann insbesondere topfförmig oder hutförmig ausgebildet sein. Bei Spannungswellengetrieben mit einem ringförmigen Flexspline gibt es neben dem Circularspline zumeist ein zweites ringförmiges, starres und innenverzahntes Zahnrad, das Dynamicspline genannt wird und das eine andere Anzahl von Zähnen aufweist als der Circularspline.

Das radialflexible Wälzlager eines Spannungswellengetriebes weist zumeist einen Lagerinnenring und einen Lageraußenring auf, zwischen denen Wälzkugeln angeordnet sind. Zumeist weist der Lagerinnenring entlang seinem Außenumfang eine umlaufende Rille auf, während der Lageraußenring entlang seinem Innenumfang ebenfalls eine umlaufende Rille aufweist. Die Wälzkörper rollen in den Rillen ab.

Aus der deutschen Offenlegungsschrift DE 10 2016 222 059 A1 ist ein Nockenwellenversteller bekannt, der ein Spannungswellengetriebe beinhaltet. Das Spannungswellengetriebe weist mehrere Getriebekomponenten, nämlich einen Wellengenerator, eine Stirnradeinrichtung, einen Innenrotor, einen Außenrotor, in dem der Innenrotor rotierbar gelagert ist, sowie eine Axiallagerscheibe, die mit dem Außenrotor drehfest verbunden ist, auf. Zum Ausgleich von Fertigungstoleranzen ist eine Federvorrichtung vorhanden, die in axialer Richtung zwischen zwei der o.g. Getriebekomponenten angeordnet ist.

Aus der europäischen Offenlegungsschrift EP 0 206 754 A2 ist ein Spannungswellengetriebe bekannt, bei dem innerhalb des Flexspline ein ringförmig ausgebildete Steifigkeitserhöher angeordnet ist. Durch den Steifigkeitserhöher soll die Torsionssteifigkeit erhöht und eine Hysterese reduziert werden, wobei der Steifigkeitserhöher auf der Niedrigachse eine radial nach außen gerichtete Kraft ausübt.

Aus der Patentschrift US 3 187 862 ist ein Spannungswellengetriebe bekannt, bei denen der Lageraußenring in einer Nut des Flexsplines gelagert ist.

Aus der deutschen Offenlegungsschrift DE 10 2020 118 799 A1 ist Spannungswellengetriebe für einen Roboter bekannt, bei dem in dem Flexspline eine zweite Laufbahn für die Wälzkörper ausgebildet ist.

Aus der chinesischen Patentanmeldung CN 111 288 077 A ist ein Spannungswellengetriebe mit einem Kreuzrollenlager und mit einem hutförmigen Flexspline bekannt. Der Flexspline weist in einem zylindrischen Abschnitt zwischen der Verzahnung und der Krempe mehrere Schlitze auf.

Es ist die Aufgabe der vorliegenden Erfindung, ein Spannungswellengetriebe anzugeben, das eine höhere Lebensdauer aufweist.

Die Aufgabe wird durch ein Spannungswellengetriebe gelöst, das dadurch gekennzeichnet ist, dass der Lageraußenring axial vorgespannt ist.

Neben der Lebensdauer der Verzahnungen ist ganz insbesondere die Lebensdauer des radialflexiblen Wälzlagers maßgeblich für die Lebensdauer des gesamten Spannungswellengetriebes.

In erfindungsgemäßer Weise wurde erkannt, dass es bei Wälzlagern besonders wichtig ist, dass die Wälzkörper ununterbrochen an dem Lageraußenring und an dem Lagerinnenring des Wälzlagers abrollen. Wenn hingegen der Fall eintritt, dass ein Wälzkörper vorübergehend den Kontakt zum Lageraußenring und/oder zum Lagerinnenring verliert, setzt das Abrollen dieses Wälzkörpers vorübergehend aus. Das anschließende Wieder-in-Kontakt-treten des Wälzkörpers mit dem Lageraußenring bzw. dem Lagerinnenring verursacht zumeist eine geringfügige Beschädigung des Lageraußenrings bzw. des Lagerinnenrings, die darauf zurückzuführen ist, dass die Oberflächengeschwindigkeit von Wälzkörper und Ring im Moment des Wieder-in-Kontakt-tretens unterschiedlich sind; ähnlich wie bei dem Aufsetzen eines nicht oder langsam rotierenden Rades eines landenden Flugzeugs auf die Landebahn. Diese Beschädigung des Lageraußenrings und/oder des Lagerinnenrings ist zwar klein; allerdings kumulieren diese Schäden, wenn der erwähnte Effekt des Aussetzens des Abrollvorgangs fortlaufend wiederholt auftritt, was die Lebensdauer des Wälzlagers erheblich reduziert.

In erfindungsgemäßer Weise wurde weiter erkannt, dass der oben genannte Effekt des Aussetzens des Abrollvorgangs bei einem Spannungswellengetriebe systematisch auftreten kann, weil die auf die Wälzkugeln wirkenden radialen Kräfte auf Grund der ovalen Form des rotierenden Vorformungseinsatzes umlaufend und ständig variieren und im Bereich der Ellipsen-Niedrigachse anders sind, als im Bereich der Ellipsen-Hochachse.

Zur Vermeidung des oben genannten Effektes des Aussetzens des Abrollvorgangs der Wälzkugeln ist gemäß der vorliegenden Erfindung vorgesehen, den Lageraußenring, insbesondere unmittelbar oder mittelbar relativ zu dem Lagerinnenring, axial vorzuspannen.

Auf diese Weise wird beispielsweise bei einem als Rillenkugellager ausgebildeten radialflexiblen Wälzlager vorteilhaft erreicht, dass die Wälzkugeln stets an den axialen Flanken der Rillen anliegen und abrollen. Gleiches gilt analog für andere Bauformen des Wälzlagers, insbesondere radialflexiblen Wälzlagers.

Zur Vermeidung oder Reduzierung des oben genannten Effektes des Aussetzens des Abrollvorgangs der Wälzkörper wäre es auch denkbar, eine ausreichend große radiale Vorspannung des Lagerinnenrings relativ zum Lageraußenring vorzusehen. Allerdings hat es sich gezeigt, dass die zur vollständigen Vermeidung des oben genannten Effektes des Aussetzens des Abrollvorgangs erforderliche radiale Vorspannung vergleichsweise hoch ist, was sich nachteilig auf die Lebensdauer des radialflexiblen Wälzlagers auswirkt, weil die bei einer ausreichend großen radialen Vorspannung erforderliche Flächenerpressung der Wälzkörper in den Rillen des Lagerinnenrings und des Lageraußenrings zu einer Schädigung des Lagerinnenrings und des Lageraußenrings führt. Die vorliegende Erfindung ermöglicht es insbesondere, eine schädliche radiale Vorspannung zu vermeiden oder zumindest zu reduzieren, indem eine (vorzugsweise viel geringere) axiale Vorspannung des Lageraußenrings bewirkt wird. Es ist erfindungsgemäß jedoch nicht ausgeschlossen und möglich, dass der Lagerinnenring und der Lageraußenring relativ zueinander sowohl radial als auch axial vorgespannt sind.

Das axiale Vorspannen des Lageraußenrings bedeutet, dass, vorzugsweise zumindest im Betrieb des Spannungswellengetriebes permanent, eine Kraft in Axialrichtung auf den Lageraußenring ausgeübt wird. Die Axialrichtung ist die Richtung entlang oder parallel zu der Rotationsmittelachse des Spannungswellengetriebes. Die Rotationsmittelachse ist zumeist die Achse, um die im Betrieb des Spannungswellengetriebes der Flexspline und/oder der Vorformungseinsatz und/oder ein Circularspline und/oder ein Dynamicspline rotiert bzw. rotieren.

Das axiale Vorspannen kann beispielsweise mittels einer Federvorrichtung realisiert sein. Insbesondere kann die Federvorrichtung vorteilhaft derart ausgebildet und angeordnet sein, dass sie unmittelbar eine Kraft in Axialrichtung des Spannungswellengetriebes ausübt.

Insbesondere kann vorteilhaft vorgesehen sein, dass der Lageraußenring relativ zu dem Lagerinnenring gegen die axiale Rückstellkraft der Federnvorrichtung (relativ zu dem Vorformungseinsatz und/oder relativ zu einem Lagerinnenring) axial beweglich angeordnet ist und/oder dass der Lageraußenring an keinem axial unbeweglichen Getriebebauteil axial anliegt und/oder dass sich der Lageraußenring an keinem axial unbeweglichen Getriebebauteil axial abstützt. Alternativ oder zusätzlich kann vorteilhaft vorgesehen sein, dass die Federnvorrichtung direkt oder indirekt von einer Seite axial gegen den Lageraußenring drückt und dass auf der axial gegenüberliegenden Seite des Lageraußenrings ein Freiraum vorhanden ist.

Bei einer vorteilhaften Ausführung wirkt die Federvorrichtung innerhalb der Vorformungsvorrichtung. In diesem Fall stützt sich die Federvorrichtung einerseits an dem Lageraußenring und andererseits an einem anderen Bauteil der Vorformungsvorrichtung, beispielsweise an einem Lagerinnenring oder an einem Vorformungseinsatz ab.

Bei einer anderen vorteilhaften Ausführung wirkt die Federvorrichtung zwischen dem Lageraußenring und einem Bauteil, das nicht zu der Vorformungsvorrichtung gehört. Beispielsweise kann sich die Federvorrichtung einerseits unmittelbar an dem Lageraußenring und andererseits an dem Flexspline, insbesondere an einem Topfboden des Flexsplines, abstützen.

Bei einer ganz besonders vorteilhaften Ausführung ist die Federvorrichtung derart angeordnet, dass ihre Hauptträgheitsachse koaxial zur Rotationsachse des Flexsplines und/oder des Circularsplines und/oder des Dynamicsplines und/oder des Lagerinnenrings und/oder des Lageraußenrings ausgerichtet ist. Auf diese Weise wird vorteilhaft ein besonders ruhiger und vibrationsarmer Lauf des Spannungswellengetriebes erreicht. Dies ist beispielsweise einfach und bauraumsparend möglich, indem wenigstens eine Wellfeder oder Tellerfeder verwendet wird. Allerdings ist die Verwendung einer Federvorrichtung eines anderen Typs, beispielsweise die Verwendung einer Schraubenfeder oder einer Evolutfeder, nicht ausgeschlossen. Insbesondere kann die Wellfeder als gewundenes und/oder gestanztes federndes Bauteil ausgebildet sein. Insbesondere kann die Federvorrichtung einen Stapel mehrerer, insbesondere gleicher, Federn aufweisen.

Die Federvorrichtung kann innerhalb des Spannungswellengetriebes derart angeordnet sein, dass sie sich einerseits unmittelbar an dem Lagerinnenring und andererseits unmittelbar an dem Lageraußenring abstützt. Es ist alternativ jedoch auch möglich, dass sich die Federvorrichtung mittelbar über eines oder mehrere andere Bauteile an dem Lagerinnenring und/oder an dem Lageraußenring abstützt.

Bei einer ganz besonders flexibel einsetzbaren Ausführung ist die axiale Vorspannung einstellbar. Hierzu kann beispielsweise ein Gewindetrieb vorhanden sein, mittels dem die Vorspannung einer Feder der Federvorrichtung eingestellt werden kann.

Insbesondere kann vorteilhaft vorgesehen sein, dass bei der Herstellung der erfindungsgemäßen Spannungswellengetriebe Federvorrichtungen mit unterschiedlichen Eigenschaften bereit gestellt werden, so dass je nach geplanter Anwendung und/oder Betriebsbelastung des Spannungswellengetriebe die spezifisch am besten geeignete Federvorrichtung eingebaut werden kann. Beispielsweise können sich die Federvorrichtungen hinsichtlich der Federkonstante und/oder hinsichtlich des Materials und/oder hinsichtlich der Bauart und/oder hinsichtlich des Federtyps voneinander unterscheiden.

Bei einer besonders vorteilhaften Ausführung stützt sich die Federvorrichtung einerseits unmittelbar an dem Flexspline, insbesondere an einem Topfboden eines topfförmig ausgebildeten Flexsplines, und andererseits an dem Lageraußenring ab. Da der Flexspline über weitere Bauteile des Spannungswellengetriebes und/oder des übergeordneten Systems, in das das Spannungswellengetriebe eingebaut ist, axial ortsfest zur Vorformungseinrichtung und/oder ortsfest zum Lagerinnenring angeordnet ist, wird im Ergebnis eine Vorspannung des Lageraußenrings relativ zum Lagerinnenring bewirkt. Eine solche Ausführung ist besonders vorteilhaft, weil der Lageraußenring und der Flextopf synchron zueinander rotieren und es daher jeweils keine, insbesondere keine schleifende, Relativbewegung zu der Federvorrichtung gibt. Mit anderen Worten bleibt die Federvorrichtung bei einer solchen Ausführung relativ zu den Bauteilen des Spannungswellengetriebes, an denen sie sich unmittelbar abstützt, ortsfest. Insbesondere kann beispielsweise vorgesehen sein, dass sich die Federvorrichtung einerseits am Topfboden und andererseits an der Stirnseite des Lageraußenrings abstützt.

Ganz allgemein ist ein System ganz besonders vorteilhaft, das ein erfindungsgemäßes Spannungswellengetriebe und eine drehmomenteinspeisende Vorrichtung, die dem Spannungswellengetriebe triebtechnisch vorgeschaltet ist, und eine angetriebene Vorrichtung, die dem Spannungswellengetriebe triebtechnisch nachgeschaltet ist, aufweist. Die drehmomenteinspeisende Vorrichtung kann beispielsweise als, insbesondere elektrischer, Antriebsmotor ausgebildet sein oder einen, insbesondere elektrischen, Antriebsmotor aufweisen. Die drehmomenteinspeisende Vorrichtung kann ein weiteres Getriebe beinhalten. Beispielsweise kann eine Abtriebswelle der drehmomenteinspeisenden Vorrichtung mit dem Vorformungseinsatz, der als Getriebeantrieb fungiert, drehfest verbunden sein, während beispielsweise der Circularspline des Spannungswellengetriebes drehfest mit einem Gehäuse oder einem Trägerbauteil der drehmomenteinspeisenden Vorrichtung zur Drehmomentabstützung drehfest verbunden ist. Der Flexspline kann als Getriebeabtrieb mit einer Antriebswelle der angetriebenen Vorrichtung, drehfest verbunden sein, während ein Gehäuse oder ein Trägerbauteil drehfest mit der angetriebenen Vorrichtung zur Drehmomentabstützung direkt oder indirekt mit dem Circularspline drehfest verbunden ist. Auch andere Konstellationen von Antrieb und Abtrieb sind möglich. Insbesondere kann vorteilhaft vorgesehen sein, dass die axiale Position von Bauteilen des Spannungswellengetriebes durch die drehmomenteinspeisende Vorrichtung und durch die angetriebene Vorrichtung festgelegt ist. Beispielsweise kann die axiale Position des Vorformungseinsatzes durch die axiale Position der mit dem Vorformungseinsatz fest verbundenen Abtriebswelle der drehmomenteinspeisenden Vorrichtung festgelegt sein. Beispielsweise kann - alternativ oder zusätzlich - die axiale Position des Flexsplines durch die axiale Position der mit dem Flexspline fest verbundenen Antriebswelle der angetriebenen Vorrichtung festgelegt sein. Insbesondere kann vorteilhaft vorgesehen sein, dass sich die Federvorrichtung indirekt an Bauteilen der drehmomenteinspeisenden Vorrichtung und/oder der angetriebenen Vorrichtung abstützt.

Bei einem als Ringgetriebe ausgebildeten Spannungswellengetriebe, das einen Circularspline und einen Dynamicspline aufweist, kann sich die Federvorrichtung beispielsweise einerseits unmittelbar an dem Lageraußenring und andererseits unmittelbar an dem Dynamicspline abstützen. Auch in diesem Fall gibt es vorteilhaft keine Relativbewegung der Federvorrichtung zu den Bauteilen, an denen sie sich abstützt, wenn die Verzahnung des Dynamicsplines dieselbe Anzahl an Zähnen aufweist, wie die Verzahnung des Flexsplines. Bei einem als Ringgetriebe ausgebildeten Spannungswellengetriebe, das einen Circularspline und einen Dynamicspline aufweist, kann sich die Federvorrichtung alternativ beispielsweise einerseits unmittelbar an dem Lageraußenring und andererseits unmittelbar an dem Circularspline abstützen. Die Federvorrichtung kann hierbei im Betrieb auf Grund einer eventuellen Relativrotation des Circularsplines relativ zu dem Lageraußenring schleifend an dem Circularspline anliegen.

Ganz allgemein (und wie bereits erwähnt) kann vorteilhaft vorgesehen sein, dass sich die Federvorrichtung unmittelbar an einem Flexspline des Spannungswellengetriebes abstützt. Bei einer topfförmigen Bauweise des Flexsplines kann die Federvorrichtung vorteilhaft, insbesondere vollständig, in dem Flextopf angeordnet sein. Eine solche Ausführung ist besonders Vorteilhaft, weil für die Federvorrichtung in einem ohnehin zur Verfügung stehenden Raum angeordnet wird und daher keinen zusätzlichen Bauraum beansprucht. Darüber hinaus ist die Federvorrichtung bei einer solchen Ausführung besonders gut gegen eine Beschädigung und/oder Verschmutzung geschützt untergebracht. Bei einer solchen Ausführung kann sich die Federvorrichtung mittelbar oder unmittelbar beispielsweise an dem Boden des Flextopfes axial abstützen.

Aber auch bei einer ringförmigen Ausbildung des Flexsplines kann die Federvorrichtung vorteilhaft und in bauraumsparender Weise wenigstens teilweise in dem von dem Flexspline umgebenen Raum angeordnet sein.

Es ist auch möglich, die axial vorspannende Federvorrichtung außerhalb des von dem Flexspline umgebenen Raumes, insbesondere außerhalb eines Flextopfes, anzuordnen.

Bei einer besonderen Ausführung weist der Lagerinnenring eine auf seinem Außenumfang angeordnete Rille auf, in der Wälzkörper abrollen. Alternativ oder zusätzlich kann vorteilhaft vorgesehen sein, dass der Lageraußenring eine auf seinem Innenumfang angeordnete Rille aufweist, in der Wälzkörper abrollen. Bei einer solchen Ausführung können die Wälzkörper des Wälzlagers vorteilhaft als Wälzkugeln ausgebildet sein.

Bei einer ganz besonders vorteilhaften Ausführung ist die Federvorrichtung in einem Schmierfett-Reservoir des Spannungswellengetriebes angeordnet. Das Schmierfett-Reservoir kann insbesondere derart ausgebildet und angeordnet sein, dass es wenigstens teilweise durch wenigstens einen Teil der Vorformungsvorrichtung, insbesondere durch eine Außenfläche des Vorformungseinsatzes, und durch den, insbesondere topfförmigen, Flexspline begrenzt ist. Eine solche Ausführung hat den ganz besonderen Vorteil, dass die Federvorrichtung zusätzlich zu ihrer Funktion, eine axiale Vorspannung zu bewirken, die zusätzliche Funktion übernehmen kann, Schmierfett von dem Lagerinnenring und/oder von dem Vorformungseinsatz fern zu halten.

Alternativ oder zusätzlich kann auch ein Abschirmelement vorhanden sein, das Schmierfett von dem Lagerinnenring und/oder von dem Vorformungseinsatz fernhält. Das Abschirmelement kann zusätzlich auch als Abstützung für die Federvorrichtung fungieren. Insbesondere kann sich die Federvorrichtung einerseits an dem Lageraußenring und andererseits an dem Abschirmelement abstützen.

Nach einem eigenständigen Erfindungsgedanken wurde nämlich erkannt, dass Teile des im Schmierfett-Reservoir bevorrateten Schmierfetts über die Lebensdauer des Spannungswellengetriebes austrocknen, was bislang unerkannt oder unbeachtet geblieben ist. Weiter wurde erkannt, dass es in mehrfacher Hinsicht nachteilig ist, wenn Teile des im Schmierfett-Reservoir bevorrateten Schmierfetts austrocknen. Zum einen stehen sehr stark ausgetrocknete Anteile für eine Schmierung des Spannungswellengetriebes nicht mehr zur Verfügung; zum anderen behindern diese stark eingetrockneten Anteile den Fluss des noch nicht eingetrockneten Anteils an Schmierfett aus dem Schmierfett-Reservoir zu den miteinander unmittelbar in Kontakt stehenden und relativ zueinander beweglichen Teilen des Spannungswellengetriebes, insbesondere zu dem radialflexiblen Wälzlager, mittels dem der Vorformungseinsatz relativ zu dem Flexspline rotierbar gelagert ist, und zu den Verzahnungen von Circularspline und Flexspline und ggf. Dynamicspline. Insbesondere kann es vorkommen, dass die ausgetrockneten Anteile wie eine Sperre und/oder eine Dichtung wirken, die ein Nachfließen von Schmierfett aus dem Schmierfett-Reservoir zu den Schmierstellen des Spannungswellengetriebes verhindern. Aber auch die Anteile des Schmierfetts, die nur geringfügig ausgetrocknet sind, sind zwar prinzipiell noch fließfähig, weisen aber schlechtere Schmiereigenschaften auf, weil sie weniger Grundöl beinhalten.

Es wurde weiter erkannt, dass der Effekt des Austrocknens im Wesentlichen durch einen permanenten Kontakt einer Schicht des Schmierfetts mit dem Vorformungseinsatz verursacht wird, die sich relativ zu dem im Schmierfett-Reservoir angeordneten Schmierfett mit hoher Rotationsgeschwindigkeit bewegt. Aufgrund dieses ständigen Kontaktes und der hierbei entstehenden Reibungswärme kommt es zu der erwähnten Austrocknung, weil der erwärmte Anteil des Schmierfetts nach und nach sein Grundöl verliert.

Die Federvorrichtung und/oder das Abschirmelement können vorteilhaft derart ausgebildet und angeordnet sein, dass sie einen unmittelbaren Kontakt des in dem Schmierfett-Reservoir befindlichen Schmierfetts mit dem Vorformungseinsatz und somit eine Reibung zwischen dem Vorformungseinsatz und dem Schmierfett und damit das Entstehen von Reibungswärme und damit letztlich ein Austrocknen des Schmierfetts verhindert.

Soweit im Rahmen dieser Anmeldung von Schmierfett die Rede ist, sind insbesondere pastöse Schmierstoffe, die ein Schmieröl (Grundöl) und einen Eindicker, wie beispielsweise Seife, Bentonite, Polyharnstoffe, PTFE, und ggf. Additive beinhalten, gemeint.

Vorzugsweise ist das Spannungswellengetriebe derart ausgebildet, dass ein Kontakt des Schmierfetts mit dem Vorformungseinsatz und vorzugsweise auch mit dem mit dem Vorformungseinsatz in unmittelbarem Kontakt stehenden Lagerinnenring des, insbesondere radialflexiblen, Wälzlagers ausgeschlossen ist. Das Verhindern eines unmittelbaren Kontakts des in dem Schmierfett-Reservoir angeordneten Schmierfettes mit dem Lagerinnenring ist vorteilhaft, weil dieser mit derselben Rotationsfrequenz rotiert, wie der Vorformungseinsatz und der oben beschriebene Effekt des Austrocknens daher auch an dem Lagerinnenring auftreten kann.

Wie bereits erwähnt, kann das Spannungswellengetriebe einen Vorformungseinsatz aufweisen, der mittels des radialflexiblen Wälzlagers relativ zu dem Flexspline rotierbar gelagert ist. Insbesondere kann vorteilhaft vorgesehen sein, dass sich die Federvorrichtung unmittelbar an dem Vorformungseinsatz abstützt.

Bei einer besonderen Ausführung ist der Lagerinnenring nicht als separates Bauteil, sondern gemeinsam einstückig mit dem Vorformungseinsatz hergestellt. Insbesondere kann in der Außenumfangsfläche des Vorformungseinsatzes eine Rille angeordnet sein, in der die Wälzkörper abrollen. Eine solche Ausführung kommt mit besonders wenigen Bauteilen aus.

Alternativ oder zusätzlich ist es auch möglich, dass der Lageraußenring nicht als separates Bauteil, sondern gemeinsam einstückig mit dem Flexspline hergestellt. In diesem Fall kann der Flexspline relativ zu dem Lagerinnenring axial vorgespannt sein. Insbesondere kann in der Innenumfangsfläche des Flexsplines eine Rille angeordnet sein, in der die Wälzkörper abrollen. Eine solche Ausführung kommt ebenfalls mit besonders wenigen Bauteilen aus.

Es ist alternativ auch möglich, dass der Lageraußenring Teil eines Two-Rollers oder eines Three-Rollers ist. Ein Two-Roller bzw. Three-Rollers kann beispielsweise durch einen rotierbar gelagerten zwei bzw. dreiarmigen Träger gebildet sein, an dessen freien Enden jeweils ein Lager, insbesondere ein Wälzlager, angeordnet ist.

Von ganz besonderem Vorteil ist ein Roboter, insbesondere ein Industrieroboter, der wenigstens ein erfindungsgemäßes Spannungswellengetriebe beinhaltet. Insbesondere kann das erfindungsgemäße Spannungswellengetriebe in einem Robotergelenk eingesetzt werden. Durch die Verwendung des erfindungsgemäßen Spannungswellengetriebes kann die Zuverlässigkeit des Roboters erhöht und die Ausfallzeit verringert werden.

Von besonderem Vorteil ist insbesondere eine Fahrzeugkomponente, beispielsweise ein aktives Fahrwerk oder eine Lenkung oder ein Nockenwellenversteller oder eine Stellvorrichtung zur Veränderung des Expansionshubes und/oder des Verdichtungsverhältnisses eines Verbrennungsmotors für ein Kraftfahrzeug, die wenigstens ein erfindungsgemäßes Spannungswellengetriebe aufweist. Durch die Verwendung einer solchen Fahrzeugkomponente kann die Zuverlässigkeit und Sicherheit des Fahrzeuges erhöht werden. Außerdem ist es vorteilhaft möglich, längere Inspektions- und/oder Reparaturintervalle vorzusehen, was die Wirtschaftlichkeit des Fahrzeuges erhöht.

Von ganz besonderem Vorteil ist ein Fahrwerk, insbesondere ein aktives Fahrwerk für ein Kraftfahrzeug, das wenigstens ein erfindungsgemäßes Spannungswellengetriebe aufweist. Durch die Verwendung des erfindungsgemäßen Spannungswellengetriebes kann die Zuverlässigkeit des Fahrwerks erhöht werden. Insbesondere können umfangreiche Reparaturarbeiten vermieden werden. Dies ist von besonderem Vorteil, weil eine Reparatur oder ein Austausch eines verschlissenen Spannungswellengetriebes bei einem Fahrwerk besonders aufwendig ist, da viele andere Bauteile für die Reparatur vorübergehend demontiert werden müssen.

Von ganz besonderem Vorteil ist eine Lenkung, insbesondere PKW-Lenkung oder LKW-Lenkung, die wenigstens ein erfindungsgemäßes Spannungswellengetriebe aufweist. Die Lenkung kann insbesondere eine Servolenkung und/oder eine Überlagerungslenkung sein. Durch die Verwendung des erfindungsgemäßen Spannungswellengetriebes kann die Zuverlässigkeit der Lenkung erheblich erhöht werden. Insbesondere können umfangreiche Reparaturarbeiten vermieden werden. Dies ist von besonderem Vorteil, weil eine Reparatur oder ein Austausch eines verschlissenen Spannungswellengetriebes bei einer Lenkung besonders aufwendig ist, da viele andere Bauteile für die Reparatur vorübergehend demontiert werden müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Spannungswellengetriebes in einer Querschnittsdarstellung entlang der Rotationsmittelachse,
- Fig. 2: ein zweites Ausführungsbeispiel eines erfindungsgemäßen Spannungswellengetriebes in einer Querschnittsdarstellung entlang der Rotationsmittelachse,
- Fig. 3: ein drittes Ausführungsbeispiel eines erfindungsgemäßen Spannungswellengetriebes in einer Querschnittsdarstellung entlang der Rotationsmittelachse,
- Fig. 4: ein Ausführungsbeispiel einer Wellfeder für ein erfindungsgemäßes Spannungswellengetriebe,
- Fig. 5 und 6: ein anderes Ausführungsbeispiel einer Wellfeder für ein erfindungsgemäßes Spannungswellengetriebe,
- Fig. 7: ein viertes Ausführungsbeispiel eines erfindungsgemäßen Spannungswellengetriebes in einer Querschnittsdarstellung entlang der Rotationsmittelachse, und
- Fig. 8: ein fünftes Ausführungsbeispiel eines erfindungsgemäßen Spannungswellengetriebes in einer Querschnittsdarstellung entlang der Rotationsmittelachse.

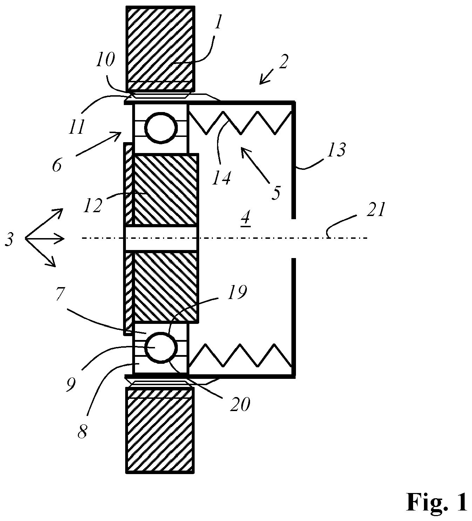

Fig. 1 zeigt ein erstes Ausführungsbeispiel eines erfindungsgemäßen Spannungswellengetriebes in einer schematischen Querschnittsdarstellung entlang der Rotationsmittelachse 21.

Das Spannungswellengetriebe weist einen Circularspline 1, einen topfförmigen Flexspline 2, eine Vorformungsvorrichtung 3, die einen mittels eines radialflexiblen Wälzlagers 6 relativ zu dem Flexspline 2 rotierbar gelagerten Vorformungseinsatz 12 aufweist auf, welcher das radialflexible Wälzlager 6 und den Flexspline 2 zu einer von der Kreisform verschiedenen Form formt. Der Vorformungseinsatz 12 ist als eine ovale, insbesondere elliptische, Scheibe ausgebildet. Das radialflexible Wälzlager 6 weist einen Lagerinnenring 7 und einen Lageraußenring 8 sowie Wälzkörper 9 auf. Der Lagerinnenring 7 weist eine auf seinem Außenumfang angeordnete Rille 19 auf, in der die Wälzkörper 9 abrollen. Der Lageraußenring 8 weist eine auf seinem Innenumfang angeordnete Rille 20 auf, in der die Wälzkörper 9 abrollen.

Eine Innenverzahnung 10 des Circularsplines 1 steht mit einer Außenverzahnung 11 des Flexsplines 2 an zwei gegenüberliegenden Stellen in Eingriff.

In dem von dem topfförmigen Flexspline 2 umgebenen Raum 4 ist eine Federvorrichtung 5 angeordnet mittels der der Lagerinnenring 7 und der Lageraußenring 8 relativ zueinander axial vorgespannt sind. Die Federvorrichtung 5 kann vorteilhaft aus einem Stapel von Wellfedern 14 oder aus einer Wellfeder 14 mit einer oder mehreren Windungen gebildet sein.

Die Federvorrichtung 5 stützt sich einerseits unmittelbar an dem Topfboden 13 des Flexsplines 2 und andererseits an dem Lageraußenring 8 ab. Da der Flexspline 2 über weitere Bauteile des Spannungswellengetriebes und/oder des übergeordneten Systems, in das das Spannungswellengetriebe eingebaut ist, axial ortsfest zum Vorformungseinsatz 12 und damit zum Lagerinnenring 7 angeordnet ist, wird im Ergebnis mittels der Federvorrichtung 5 eine axiale Vorspannung des Lageraußenrings 8 relativ zum Lagerinnenring 7 bewirkt.

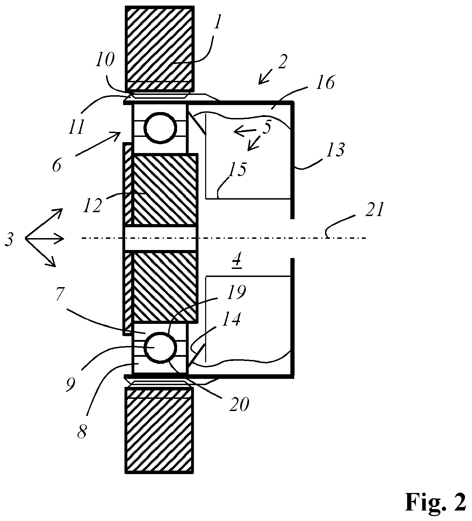

Fig. 2 zeigt in einer schematischen Darstellung ein zweites Ausführungsbeispiel. Auch bei diesem Ausführungsbeispiel ist in dem von dem topfförmigen Flexspline 2 umgebenen Raum 4 eine Federvorrichtung 5 angeordnet, mittels der der Lagerinnenring 7 und der Lageraußenring 8 relativ zueinander axial vorgespannt sind.

Der von dem topfförmigen Flexspline 2 umgebene Raum 4 dient außerdem auch als Schmierfett-Reservoir, in dem Schmierfett 16 angeordnet ist.

Die Federvorrichtung 5 weist eine Wellfeder 14 und ein Abschirmelement 15 auf. Die Federvorrichtung 5 stützt sich mit einem Ende der Wellfeder einerseits unmittelbar an dem Abschirmelement 15 (und dieses an dem Topfboden 13 des Flexsplines 2) ab und mit dem anderen Ende andererseits an dem Lageraußenring 8 ab. Das Abschirmelement 15 hält Schmierfett 16 von dem Lagerinnenring 7 und von dem Vorformungseinsatz 12 fern, während die Wellfeder 14 (nicht eingezeichnete) Öffnungen aufweist, durch die hindurch das Schmierfett 16 austreten kann, um direkt oder indirekt zu den zu schmierenden Teilen des Spannungswellengetriebes zu gelangen. Auf diese Weise wird vorteilhaft erreicht, dass das Schmierfett 16 aus dem Reservoir unmittelbar zu dem radialflexiblen Wälzlager 6 der Vorformungsvorrichtung 3 gelangen kann, mittels dem der Vorformungseinsatz 12 relativ zu dem Flexspline 2 rotierbar gelagert ist.

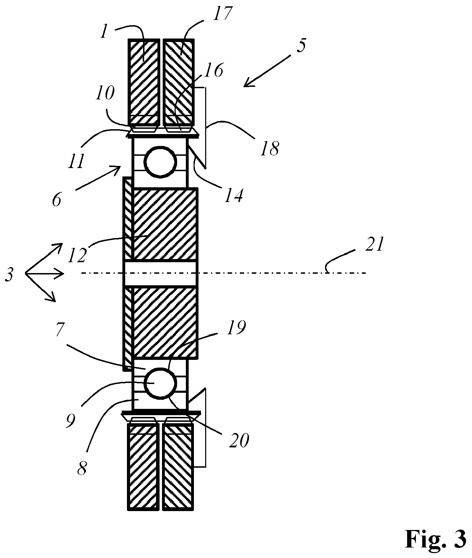

Fig. 3 zeigt in einer schematischen Darstellung ein drittes Ausführungsbeispiel eines erfindungsgemäßen Spannungswellengetriebes mit einem ringförmigen Flexspline 2.

Das Spannungswellengetriebe weist einen Circularspline 1 auf, dessen Innenverzahnung 10 mit der Außenverzahnung 11 des Flexsplines 2 an zwei gegenüberliegenden Stellen auf Grund der Verformung des Flexsplines 2 durch den Vorformungseinsatz 12 in Zahneingriff steht. Das Spannungswellengetriebe weist außerdem einen Dynamicspline 17 auf, dessen Innenverzahnung 18 ebenfalls mit der Außenverzahnung 11 des Flexsplines 2 an zwei gegenüberliegenden Stellen auf Grund der Verformung des Flexsplines 2 und des radialflexiblen Wälzlagers 6 durch den Vorformungseinsatz 12 in Zahneingriff steht.

Das radialflexible Wälzlager 6 weist einen Lagerinnenring 7 und einen Lageraußenring 8 sowie Wälzkörper 9 auf. Der Lagerinnenring 7 weist eine auf seinem Außenumfang angeordnete Rille 19 auf, in der die Wälzkörper 9 abrollen. Der Lageraußenring 8 weist eine auf seinem Innenumfang angeordnete Rille 20 auf, in der die Wälzkörper 9 abrollen.

Die Anzahl der Zähne der Innenverzahnung 10 des Dynamicsplines 17 ist bei dieser Ausführung vorzugsweise gleich zu der Anzahl der Zähne der Außenverzahnung 10 des Flexsplines 2. Die Anzahl der Zähne der Innenverzahnung 16 des Circularsplines 1 ist verschieden von der Anzahl der Zähne der Innenverzahnung 10 des Dynamicsplines 17.

Das Spannungswellengetriebe weist außerdem eine Federvorrichtung 5 auf, die sich einerseits an dem Dynamicspline 17 und andererseits an dem Lageraußenring 8 abstützt. Da der Dynamicspline 17 über weitere Bauteile des Spannungswellengetriebes und/oder des übergeordneten Systems, in das das Spannungswellengetriebe eingebaut ist, axial ortsfest zum Vorformungseinsatz 12 und damit zum Lagerinnenring 7 angeordnet ist, wird im Ergebnis mittels der Federvorrichtung 5 eine axiale Vorspannung des Lageraußenrings 8 relativ zum Lagerinnenring 7 bewirkt.

Die Federvorrichtung 5 kann beispielsweise eine Wellfeder 14 und ein Abstützbauteil 18 aufweisen. Auch andere Federtypen, wie beispielsweise eine Tellerfeder, sind möglich.

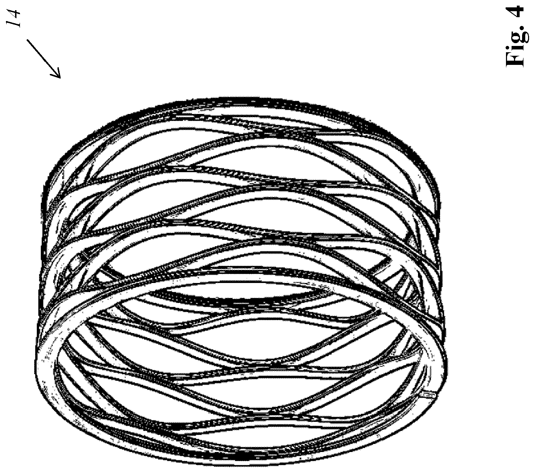

Fig. 4 zeigt ein Ausführungsbeispiel einer Wellfeder 14 mit mehreren Windungen für ein erfindungsgemäßes Spannungswellengetriebe. Insbesondere kann eine solche Wellfeder in dem in Fig. 1 dargestellten ersten Ausführungsbeispiel eines erfindungsgemäßen Spannungswellengetriebes verwendet werden. Allerdings sind alternativ auch andere Federtypen verwendbar.

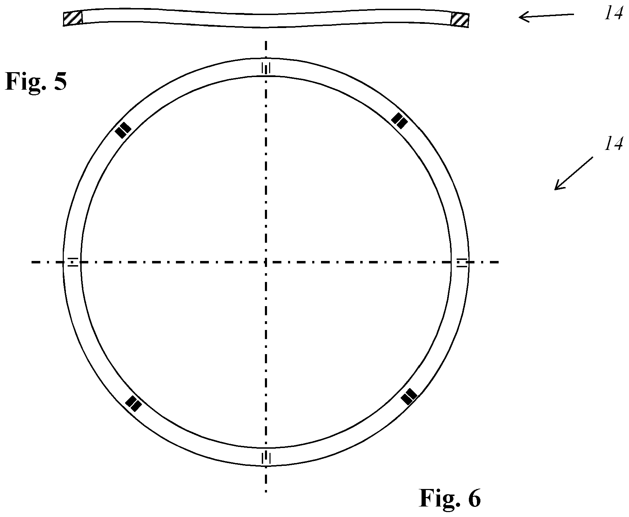

Die Figuren 5 und 6 zeigen in einer Seitenansicht und in einer Draufsicht ein Ausführungsbeispiel einer ringförmigen Wellfeder 14 mit einer einzigen Windung für ein erfindungsgemäßes Spannungswellengetriebe. Insbesondere kann eine solche Wellfeder beispielsweise in den Ausführungsbeispielen eines erfindungsgemäßen Spannungswellengetriebes verwendet werden, die in den Figuren 2 und 3 dargestellt sind. Allerdings sind alternativ auch andere Federtypen verwendbar.

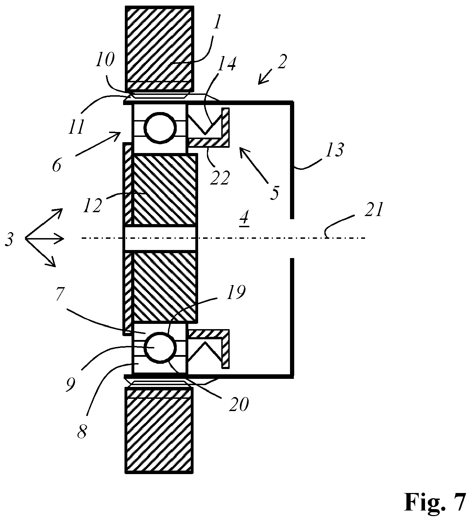

Figur 7 zeigt ein viertes Ausführungsbeispiel eines erfindungsgemäßen Spannungswellengetriebes in einer Querschnittsdarstellung entlang der Rotationsmittelachse.

Das Spannungswellengetriebe weist einen Circularspline 1, einen topfförmigen Flexspline 2, eine Vorformungsvorrichtung 3, die einen mittels eines radialflexiblen Wälzlagers 6 relativ zu dem Flexspline 2 rotierbar gelagerten Vorformungseinsatz 12 aufweist auf, welcher das radialflexible Wälzlager 6 und den Flexspline 2 zu einer von der Kreisform verschiedenen Form formt. Der Vorformungseinsatz 12 ist als eine ovale, insbesondere elliptische, Scheibe ausgebildet. Das radialflexible Wälzlager 6 weist einen Lagerinnenring 7 und einen Lageraußenring 8 sowie Wälzkörper 9 auf. Der Lagerinnenring 7 weist eine auf seinem Außenumfang angeordnete Rille 19 auf, in der die Wälzkörper 9 abrollen. Der Lageraußenring 8 weist eine auf seinem Innenumfang angeordnete Rille 20 auf, in der die Wälzkörper 9 abrollen.

Eine Innenverzahnung 10 des Circularsplines 1 steht mit einer Außenverzahnung 11 des Flexsplines 2 an zwei gegenüberliegenden Stellen in Eingriff.

In dem von dem topfförmigen Flexspline 2 umgebenen Raum 4 ist eine Federvorrichtung 5 angeordnet mittels der der Lagerinnenring 7 und der Lageraußenring 8 relativ zueinander axial vorgespannt sind. Die Federvorrichtung 5 kann vorteilhaft aus einem Stapel von Wellfedern 14 oder aus einer Wellfeder 14 mit einer oder mehreren Windungen gebildet sein.

Die Federvorrichtung 5 stützt sich einerseits an einem fest mit dem Lagerinnenring 7 verbundenen Abstützring 22 und andererseits an dem Lageraußenring 8 ab. Im Ergebnis wird mittels der Federvorrichtung 5 eine axiale Vorspannung des Lageraußenrings 8 relativ zum Lagerinnenring 7 bewirkt.

Der Abstützring 22 kann auch als Bestandteil des Lagerinnenrings 7 ausgebildet sein. In diesem Fall stütz sich die Federvorrichtung 5 unmittelbar an dem Lagerinnenring 7 ab.

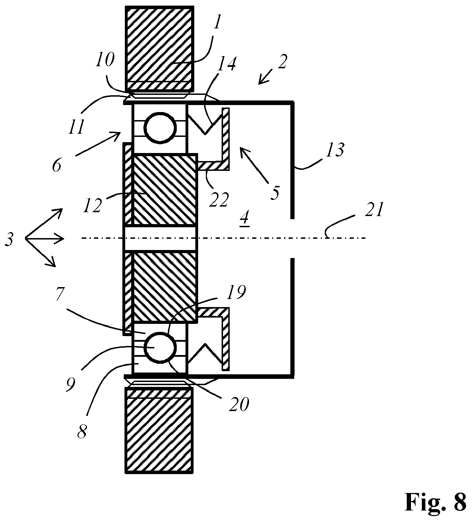

Figur 8 zeigt ein fünftes Ausführungsbeispiel eines erfindungsgemäßen Spannungswellengetriebes in einer Querschnittsdarstellung entlang der Rotationsmittelachse.

Das Spannungswellengetriebe ist im Wesentlichen genauso aufgebaut, wie das in Figur 7 dargestellte Spannungswellengetriebe.

Im Unterscheid zu dem in Figur 7 dargestellten Spannungswellengetriebe stützt sich die Federvorrichtung 5 einerseits an einem fest mit dem Vorformungsvorrichtung 3 verbundenen Abstützring 22 und andererseits an dem Lageraußenring 8 ab. Da die Vorformungsvorrichtung 3 fest mit dem Lagerinnenring 7 verbunden ist, wird im Ergebnis mittels der Federvorrichtung 5 eine axiale Vorspannung des Lageraußenrings 8 relativ zum Lagerinnenring 7 bewirkt.

Der Abstützring 22 kann auch als Bestandteil des Vorformungsvorrichtung 3 ausgebildet sein. In diesem Fall stütz sich die Federvorrichtung 5 unmittelbar an der Vorformungsvorrichtung 3 ab.

### Bezugszeichenliste:

- 1: Circularspline
- 2: Flexspline
- 3: Vorformungsvorrichtung
- 4: von dem topfförmigen Flexspline 2 umgebener Raum
- 5: Federvorrichtung
- 6: Radialflexibles Wälzlager
- 7: Lagerinnenring
- 8: Lageraußenring
- 9: Wälzkörper
- 10: Innenverzahnung
- 11: Außenverzahnung
- 12: Vorformungseinsatz
- 13: Topfboden
- 14: Wellfeder
- 15: Abschirmelement
- 16: Schmierfett
- 17: Dynamicspline
- 18: Abstützbauteil
- 19: Rille
- 20: Rille
- 21: Rotationsmittelachse

## Patentansprüche

1. Spannungswellengetriebe mit einer Vorformungsvorrichtung (3), die wenigstens ein Wälzlager (6) mit einem Lageraußenring (8) aufweist, **dadurch gekennzeichnet, dass** der Lageraußenring (8) axial vorgespannt ist.

2. Spannungswellengetriebe nach Anspruch 1, **dadurch gekennzeichnet, dass** das Spannungswellengetriebe eine, insbesondere als Wellfeder (14) oder als ein Stapel von Wellfedern (14) oder als Tellerfeder oder als ein Stapel von Tellerfedern ausgebildete, Federvorrichtung (5) zur Erzeugung der axialen Vorspannung aufweist.

3. Spannungswellengetriebe nach Anspruch 1 oder 2, **dadurch gekennzeichnet, dass** der Lageraußenring (8) eine auf seinem Innenumfang angeordnete Rille (20) aufweist, in der Wälzkörper (9) abrollen.

4. Spannungswellengetriebe nach einem der Ansprüche 1 bis 3, **dadurch gekennzeichnet, dass** das Wälzlager (6) einen Lagerinnenring (7) aufweist, insbesondere einen Lagerinnenring (7), der eine auf seinem Außenumfang angeordnete Rille (19) aufweist, in der Wälzkörper (9) abrollen.

5. Spannungswellengetriebe nach Anspruch 2 oder 3 und Anspruch 4, **dadurch gekennzeichnet, dass** sich die Federvorrichtung (5) einerseits mittelbar oder unmittelbar an dem Lagerinnenring (7) und andererseits mittelbar oder unmittelbar an dem Lageraußenring (8) abstützt.

6. Spannungswellengetriebe nach einem der Ansprüche 2 bis 5, **dadurch gekennzeichnet, dass**
a. sich die Federvorrichtung (5) unmittelbar an einem Flexspline (2) des Spannungswellengetriebes abstützt, und/oder dass
b. der Flexspline (2) topfförmig oder ringförmig oder hutförmig ausgebildet ist, und/oder dass
c. die Federvorrichtung (5) wenigstens teilweise, insbesondere vollständig, in dem von dem Flexspline (2) umgebenen Raum (4) angeordnet ist.

7. Spannungswellengetriebe nach einem der Ansprüche 2 bis 6, **dadurch gekennzeichnet, dass**
a. sich die Federvorrichtung (5) unmittelbar an einem Dynamicspline (17) oder einem Circularspline (1) des Spannungswellengetriebes abstützt, und/oder dass
b. die Federvorrichtung (5) in einem, insbesondere ganz oder teilweise mit Schmierfett befüllten, Schmierfett-Reservoir des Spannungswellengetriebes angeordnet ist, und/oder dass
c. die Federvorrichtung (5) dazu ausgebildet ist, Schmierfett (16), insbesondere in einem Schmierfett-Reservoir des Spannungswellengetriebes angeordnetes Schmierfett (16), von dem Lagerinnenring (7) fern zu halten.

8. Spannungswellengetriebe nach einem der Ansprüche 1 bis 7, **dadurch gekennzeichnet, dass**
a. die Vorformungsvorrichtung (3) einen Vorformungseinsatz (12) aufweist, der mittels des Wälzlagers (6) relativ zu dem Flexspline (2) rotierbar gelagert ist, und/oder dass
b. die Vorformungsvorrichtung (3) einen Vorformungseinsatz (12) aufweist, der mittels des Wälzlagers (6) relativ zu dem Flexspline (2) rotierbar gelagert ist, und dass sich die Federvorrichtung (5) unmittelbar an dem Vorformungseinsatz (12) abstützt, und/oder dass
c. die Vorformungsvorrichtung (3) einen Vorformungseinsatz (12) aufweist, der mittels des Wälzlagers (6) relativ zu dem Flexspline (2) rotierbar gelagert ist, und dass die Federvorrichtung (5) dazu ausgebildet ist, Schmierfett (16), insbesondere in einem Schmierfett-Reservoir des Spannungswellengetriebes angeordnetes Schmierfett (16), von dem Vorformungseinsatz (12) fern zu halten.

9. Spannungswellengetriebe nach einem der Ansprüche 1 bis 8, **dadurch gekennzeichnet, dass**
a. ein Abschirmelement (15) vorhanden ist, das Schmierfett 16, insbesondere in einem Schmierfett-Reservoir des Spannungswellengetriebes angeordnetes Schmierfett (16), von dem Lagerinnenring (7) und/oder von dem Vorformungseinsatz (12) fernhält, oder dass
b. ein Abschirmelement (15) vorhanden ist, das Schmierfett 16, insbesondere in einem Schmierfett-Reservoir des Spannungswellengetriebes angeordnetes Schmierfett (16), von dem Lagerinnenring (7) und/oder von dem Vorformungseinsatz (12) fernhält, und dass sich die Federvorrichtung (5) unmittelbar an dem Abschirmelement (15) abstützt.

10. Spannungswellengetriebe nach einem der Ansprüche 2 bis 9, **dadurch gekennzeichnet, dass**
a. die Federvorrichtung (5) derart angeordnet ist, dass ihre Hauptträgheitsachse koaxial zur Rotationsachse des Flexsplines (2) und/oder des Circularsplines (1) und/oder des Dynamicsplines (17) und/oder des Lagerinnenrings (7) und/oder des Lageraußenrings (8) ausgerichtet ist, und/oder dass
b. die Federvorrichtung (5) derart ausgebildet und angeordnet ist, dass sie relativ zu den Bauteilen des Spannungswellengetriebes, an denen sie sich unmittelbar abstützt, ortsfest ist.

11. Spannungswellengetriebe nach einem der Ansprüche 2 bis 10, **dadurch gekennzeichnet, dass** das Spannungswellengetriebe wenigstens eines der nachfolgenden Merkmale aufweist:
a. der Lagerinnenring (7) ist separat dem von dem Vorformungseinsatz (12) hergestellt,
b. der Lagerinnenring (7) ist gemeinsam einstückig mit dem Vorformungseinsatz (12) hergestellt,
c. der Lageraußenring (8) ist gemeinsam einstückig mit dem Flexspline (2) hergestellt,
d. die Vorformungsvorrichtung (3) ist als Two-Roller oder als Three-Roller ausgebildet.

12. Spannungswellengetriebe nach einem der Ansprüche 1 bis 11, **dadurch gekennzeichnet, dass** die axiale Vorspannung, beispielsweise mittels eines Gewindetriebs, einstellbar ist.

13. System, das ein Spannungswellengetriebe nach einem der Ansprüche 1 bis 12 und eine drehmomenteinspeisende Vorrichtung, die dem Spannungswellengetriebe triebtechnisch vorgeschaltet ist, und eine angetriebene Vorrichtung, die dem Spannungswellengetriebe triebtechnisch nachgeschaltet ist, aufweist.

14. Roboter, insbesondere Industrieroboter, beinhaltend wenigstens ein Spannungswellengetriebe nach einem der Ansprüche 1 bis 12 oder Robotergelenk, das wenigstens ein Spannungswellengetriebe nach einem der Ansprüche 1 bis 12 aufweist.

15. Fahrzeugkomponente, die wenigstens ein Spannungswellengetriebe nach einem der Ansprüche 1 bis 12 aufweist, insbesondere Fahrzeugkomponente, die
a. als Fahrwerk, insbesondere als aktives Fahrwerk, für ein Kraftfahrzeug, oder die
b. als Lenkung, insbesondere als PKW-Lenkung und/oder LKW-Lenkung und/oder Servolenkung und/oder eine Überlagerungslenkung, ausgebildet ist.
